# EUROPEAN PATENT SPECIFICATION

(11) **EP 2 735 714 B1**
(45) Date of publication and mention of the grant of the patent: **19.10.2016**
(21) Application number: 12864943.1
(22) Date of filing: 26.12.2012
(51) Int. Cl.: F01N 3/025

(54) **ENGINE EXHAUST PURIFICATION DEVICE**
ABGASREINIGUNGSVORRICHTUNG FÜR MOTOR
DISPOSITIF DE PURIFICATION D'UN ÉCHAPPEMENT DE MOTEUR

(30) Priority: 12.01.2012 JP 2012004231
(43) Date of publication of application: 28.05.2014
(73) Proprietor: Hino Motors Ltd., Tokyo 191-8660 (JP)
(72) Inventor: TSUMAGARI, Ichiro, Hino-shi Tokyo 191-8660 (JP); SHIBUYA, Ryo, Hino-shi Tokyo 191-8660 (JP)
(74) Representative: Tranter, Andrew David
(86) International application number: PCT/JP2012/083657
(87) International publication number: WO 2013/105437

(56) References cited:
- EP-A1- 2 387 656
- WO-A1-2012/001733
- JP-A- H03 199 612
- JP-A- S59 134 315
- JP-A- S59 158 310
- JP-A- S60 104 710
- JP-A- 2009 203 898
- JP-A- 2010 043 597
- JP-A- 2010 043 597
- US-A1- 2005 153 252

## Description

### TECHNICAL FIELD

The technique of the present disclosure relates to an engine exhaust purification device that purifies exhaust from an engine with a filter, and more particularly, to an engine exhaust purification device that heats a filter with a burner to remove deposited fine particles.

### BACKGROUND ART

Patent document 1 describes an example of a widely known engine exhaust purification device that uses a diesel fine particle trapping filter (hereinafter referred to as filter) to trap fine particles suspended in exhaust. In this exhaust purification device, the filter traps fine particles in the exhaust and purifies the exhaust. However, the fine particles need to be removed from the filter in order to maintain the function of the filter.

A known device heats the exhaust fed to the filter with a burner is one known exhaust purification device that removes fine particles from the filter. In an exhaust purification device that includes a burner, when the amount of fine particles deposited on the filter exceeds a predetermined amount, the exhaust is heated by burning fuel with the burner to raise the temperature of the filter until the soot, which is the main component of the fine particles, be oxidized. This removes the fine particles deposited on the filter and allows for the regenerated filter to trap fine particles in the exhaust again.

### PRIOR ART DOCUMENT

### PATENT DOCUMENT

Patent Document 1: Japanese Laid-Open Patent Publication No. 2011-157824

US2005/153252 discloses an engine exhaust purification device comprising a filter downstream of a burner including a fuel injection nozzle. The control increases the amount of fuel from the fuel injection nozzle when the filter temperature should increase and decreases the amount of fuel from the fuel injection nozzle when the filter temperature should not increase.

JP2010043597 discloses the lengthening of an injection stop period to influence the temperature of an oxidation catalyst and therefore the filter of an engine exhaust purification device.

### SUMMARY OF THE INVENTION

### PROBLEMS THAT ARE TO BE SOLVED BY THE INVENTION

The oxidation reaction of the fine particles trapped in the filter advances more smoothly as the temperature of the filter increases. It is thus preferable that the filter be heated to a high temperature to remove a predetermined amount of fine particles within a short period of time. However, if the temperature to which the filter is reached becomes higher than the mechanical or chemical upper temperature limit, the fine particle trapping function may be impaired due to deformation and denaturation of the filter. Thus, in the engine exhaust purification device described above, there is a strong demand for a technique that stabilizes the temperature of the filter at a high temperature so that deformation and denaturation of the filter does not occur. It is
an object of the technique of the present disclosure to provide an engine exhaust purification device that allows for the temperature of the filter to be raised without impairing the stability of the filter at that temperature.

### MEANS FOR SOLVING THE PROBLEM

To achieve the above object, one aspect of the present invention is an engine exhaust purification device including a filter, a burner, and a control unit. The filter is arranged in an exhaust pipe of an engine and traps fine particles that are suspended in an exhaust passing through the exhaust pipe. The burner includes a fuel injection nozzle arranged at a position located at an upstream side of the filter in the exhaust pipe. The burner burns fuel injected from the fuel injection nozzle and heats the exhaust to increase the temperature of the filter and remove the fine particles trapped in the filter. The control unit controls a fuel injection mode of the fuel injection nozzle. A period including a single fuel injection period and a single injection
stop period is set as a single injection cycle. The fuel injection period is a period in which fuel is injected for a number of times at a predetermined frequency. The injection stop period is a variable period in which the injection of fuel is stopped. The control unit controls the fuel injection nozzle so that the fuel injection nozzle injects fuel in accordance with the injection cycle. The control unit is configured to lengthen the injection stop period as the temperature of the filter increases.

In the aspect described above, the fuel injection nozzle injects fuel for a number of times at a predetermined frequency in the fuel injection period, which is a predetermined period. Thus, compared to when the same amount of fuel is injected all at once in the fuel injection period, the mixing of air supplied to the burner and fuel is promoted, thereby advancing the combustion of fuel. This raises the temperature of the exhaust that passes by the burner. Thus, the temperature of the filter arranged at the downstream side of the burner is also raised.

In the aspect described above, the cycle of fuel injection by the fuel injection nozzle includes a single first fuel injection period and a single injection stop period. Further, the length of the injection stop period increases as the temperature of the filter increases. Thus, an increase in the temperature of the filter increases the proportion of exhaust having a relatively low temperature in the exhaust supplied to the filter. In contrast, a decrease in the temperature of the filter decreases the proportion of exhaust having a relatively high temperature in the exhaust supplied to the filter. Thus, an excessive decrease and an insufficient decrease of the temperature of the filter is suppressed. Therefore, the temperature of the filter may be raised while maintaining the stability of the temperature.

Preferably, the control unit is configured to shorten the injection stop period as an exhaust flow rate increases in the exhaust pipe.

In the aspect described above, the injection stop period is set to be shorter as the exhaust flow rate increases, which is the flow rate of the exhaust flowing through the exhaust pipe. That is, the injection stop period is set to be shorter as the exhaust flow rate increases and the degree at which the temperature falls in the filter per unit time increases. In contrast, the injection stop period is set to be longer as the flow rate of the exhaust decreases and the degree at which the temperature fall in the filter per unit time decreases. Thus, the temperature of the filter does not excessively or insufficiently decrease.

Preferably, the fuel injection period is a first fuel injection period. A period of one of a number of injections repeated at the predetermined frequency in the first fuel injection period is a second fuel injection period. The engine includes an intake pipe that supplies air to the burner. The control unit is configured to lengthen the second fuel injection period as the air amount supplied to the burner increases in the first fuel injection period.

In the aspect described above, the second fuel injection period is lengthened as the air amount supplied to the burner in the first fuel injection period increases. This allows for insufficient and excessive injection of fuel from the fuel injection nozzle relative to the air amount. Thus, the temperature in the vicinity of the burner is not decreased by the unburned residual fuel or limited by the supplied fuel amount. Therefore, the temperature of the exhaust supplied to the filter is easily raised by the fuel in the burner. Further, the temperature of the filter is easily raised.

Preferably, the control unit is configured to set the second fuel injection period so that a ratio of a total amount of fuel injected in the first fuel injection period and an air amount supplied to the burner in the first fuel injection period conforms to the stoichiometric air-fuel ratio.

In the aspect described above, the second fuel injection period is changed so that the air-fuel ratio when burning fuel in the burner becomes the stoichiometric air-fuel ratio, that is, the equivalence ratio becomes 1. Thus, the fuel injected from the fuel injection nozzle reacts with the oxygen in the air supplied to the burner without being insufficient of excessive. As a result, the temperature in the vicinity of the burner is not decreased by unburned residual fuel or limited by the supplied fuel amount. Therefore, the temperature of the exhaust supplied to the filter is easily raised by the combustion in the burner. Further, the temperature of the filter is easily raised.

Preferably, the control unit sets the injection stop period and the second fuel injection period in the injection cycle.

In the aspect described above, the setting of the injection stop period and the setting of the second fuel injection period are performed in the cycle including the first fuel injection period and the injection stop period. Thus, changes in the combustion state of the burner and changes in the temperature of the filter are reflected on the setting of the injection stop period and the second fuel injection period within the shortest interval. The width of fluctuation in the temperature of the filter thus becomes smaller compared to when the setting of the periods described above are performed in intervals longer than the cycle including the fuel injection period and the injection stop period.

Preferably, the control unit sets the frequency to 100 Hz or greater and 200 Hz or less.

The inventors of the present application have thoroughly studied injection modes of fuel from a fuel injection nozzle and found that when the frequency at which the fuel is injected from the fuel injection nozzle is 100 Hz or greater and 200 Hz or less, the fuel and the air supplied to the burner easily mix and the equivalence ratio in the vicinity of the fuel injection nozzle easily becomes 1.

In this regards, in other aspects described above, the frequency at which the fuel is injected is 100 Hz or greater and 200 Hz or less. Thus, fuel and air are easily mixed and the equivalence ratio in the vicinity of the fuel injection nozzle easily becomes 1. As a result, fuel is easily burned without being insufficient or excessive. Further, the temperature of the filter is easily raised.

Preferably, the control unit sets a unit injection amount, which is an injection amount of fuel per unit time in the fuel injection cycle, based on a map of which parameters are the exhaust flow rate in the exhaust pipe and the temperature of the filter. The control unit calculates and sets the injection stop period from the total amount of fuel injected in the fuel injection period and the unit injection amount.

In the aspect described above, the unit injection amount is calculated based on the exhaust flow rate and the temperature of the filter when setting the injection stop period. The injection stop period is calculated from the unit injection amount and the total fuel amount injected during the first fuel injection period. The fuel injected during the first fuel injection period may be continuously burned in the burner even after the injection stop period is reached. Further, the temperature of the flame generated by the combustion increases as the unit injection amount increases. Moreover, changes in the amount of heat exchanged between the filter and the exhaust increases as changes increases in the exhaust flow rate of the exhaust pipe. For example, the temperature of the filter is less likely to decrease as the exhaust flow rate decreases, and the temperature of the filter is likely to decrease as the exhaust flow rate increases. Thus, the temperature of the filter is affected by the unit injection amount and the exhaust flow rate. In this regards, according to the aspects described above, a value that takes into consideration the exhaust flow rate and the unit injection amount is set for the injection stop period configuring the cycle described above. This maintains the temperature of the filter at a predetermined temperature with higher accuracy.

### BRIEF DESCRIPTION OF THE DRAWINGS

Fig. 1 is a schematic block diagram showing the structure of a diesel engine including an engine exhaust purification device according to one embodiment of the present disclosure.
Fig. 2 is a diagram showing the waveform of a pulse signal output from a controller to a fuel injection nozzle of Fig. 1.
Fig. 3 is a diagram showing the relationship of a drive frequency of the fuel injection nozzle and an equivalence ratio.
Fig. 4 is a graph showing the relationship of the equivalence ratio and the flame temperature.
Fig. 5 is a graph showing the relationship of a second fuel injection period and the air amount in a burner.
Fig. 6 is a graph showing the relationship of the filter temperature and the exhaust flow rate.
Fig. 7 is a flowchart showing the procedures of a filter regeneration processing.
Fig. 8 is a graph showing the relationship of the temperature of the filter and the drive time of the burner.
Fig. 9 is a graph showing the relationship of the filter regeneration speed and the temperature of the filter.

### EMBODIMENTS OF THE INVENTION

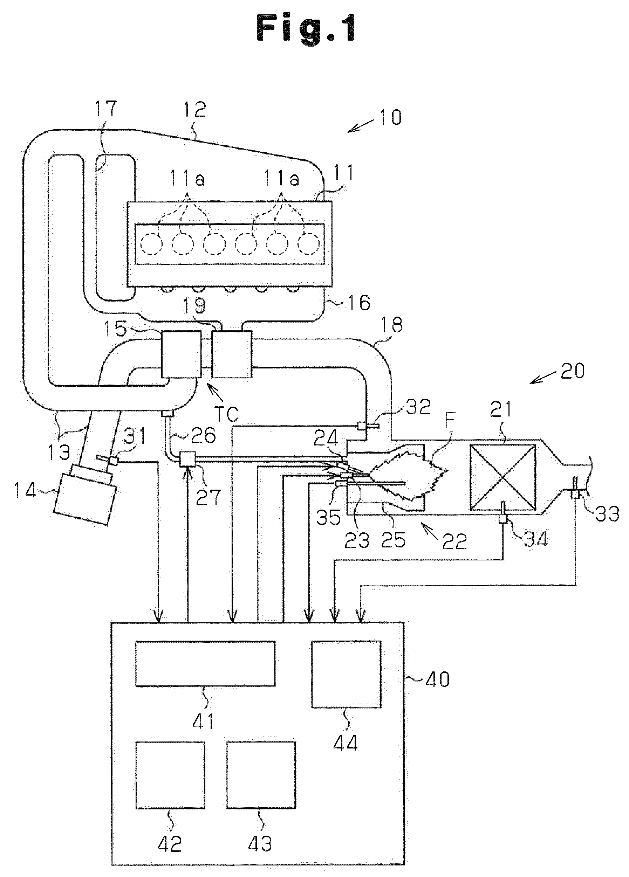

One embodiment of an engine exhaust purification device according to the present disclosure will now be described with reference to Figs. 1 to 9. First, the overall structure of a diesel engine including an exhaust purification device will be described with reference to Fig. 1. Here, a passage for drawing air into the diesel engine and a passage for discharging air out of the diesel engine will be described, and the remaining structure will not be described.

### Schematic Structure of Diesel Engine

As shown in Fig. 1, a diesel engine 10 has a cylinder block 11 including six cylinders 11a arranged in a single row. Each cylinder 11a is connected to an intake manifold 12, which supplies intake air to each cylinder 11a, and an exhaust manifold 16, into which the exhaust from each cylinder 11a flows.

An intake pipe 13, which is the passage of the intake air and coupled to the intake manifold 12, has an upstream end coupled to an air cleaner 14. A compressor 15 of a turbo charger TC is arranged at the middle of the intake pipe 13. An exhaust pipe 18, which is the passage of the exhaust, is connected to the exhaust manifold 16. Further, an EGR pipe 17 connects the intake pipe 13 and the exhaust manifold 16 to send exhaust into the intake pipe 13. A turbine 19 coupled to the compressor 15 is connected to an upstream side of the exhaust pipe 18. An exhaust purification device 20 that purifies the exhaust by removing fine particles such as soot in the exhaust pipe 18 is arranged at the downstream side of the exhaust pipe 18.

### Structure of Exhaust Purification Device

The structure of the exhaust purification device 20 will now be described with reference to Fig. 1. A filter 21 for trapping fine particles suspended in the exhaust is arranged in the exhaust purification device 20. A burner 22 that heats the exhaust fed to the filter 21 is arranged at the upstream side of the filter 21. The filter 21 has, for example, a honeycomb structure formed by porous silicon carbide, and the fine particles in the exhaust are trapped in by inner wall surfaces of a cylindrical body forming the honeycomb structure.

The burner 22 includes a fuel injection nozzle 23, an ignition plug 24, and a flame stabilizer 25. A fuel pump (not shown) for supplying fuel to the cylinder 11a is connected to the fuel injection nozzle 23, and the fuel injection nozzle 23 injects fuel at, for example, a pressure of 0.5 MPa to 4 MPa and preferably at a pressure of 1 MPa or lower. Since the injection pressure of the fuel injection nozzle 23 is a fixed value, the fuel amount injected per unit time from the fuel injection nozzle 23 is also a fixed amount. The ignition plug 24 generates a spark to ignite a mixture of air and fuel, which is injected from the fuel injection nozzle 23. The flame stabilizer 25 is substantially cylindrical and surrounds the fuel injection nozzle 23 and the ignition plug 24. The ignition of the mixture generates a flame F in the flame stabilizer 25.

An air supply tube 26, which opens in the downstream side of the compressor 15 in the intake pipe 13 and opens in a space surrounded by the flame stabilizer 25 in the exhaust purification device 20, is connected to the exhaust purification device 20. An air valve 27 is arranged at the middle of the air supply tube 26. In the air supply tube 26, the intake air flows from the intake pipe 13 to the exhaust purification device 20 when the air valve 27 opens, and the flow of the intake air from the intake pipe 13 to the exhaust purification device 20 is stopped when the air valve 27 closes.

### Electrical Configuration of Diesel Engine

The electrical configuration of the diesel engine 10 will now be described with reference to Fig. 1. As shown in Fig. 1, an intake air amount sensor 31 that detects the intake air amount in the intake pipe 13 is arranged at the downstream side of the air cleaner 14 and the upstream side of the compressor 15 in the intake pipe 13. An upstream exhaust flow rate sensor 32 is arranged at the upstream side of the exhaust purification device 20 in the exhaust pipe 18, and a downstream exhaust flow rate sensor 33 is arranged at the downstream side of the exhaust purification device 20 in the exhaust pipe 18. A filter temperature sensor 34, which detects the temperature of the filter 21, and a flame temperature sensor 35, which detects the temperature of the flame F generated in the flame stabilizer 25, are arranged at the exhaust purification device 20.

The diesel engine 10 includes a controller 40 that is connected to the sensors 31 to 35 and controls the drive mode of the diesel engine 10 using signals input from the sensors 31 to 35.

The controller 40 includes an input/output unit 41, a control unit 42, a memory unit 43, and a nozzle drive unit 44. The input/output unit 41 executes input processing of a detection signal related with the intake air amount input from the intake air amount sensor 31, and input processing of detection signals related with the exhaust flow rate input from the upstream exhaust flow rate sensor 32 and the downstream exhaust flow rate sensor 33. In addition, the input/output unit 41 executes input processing of a detection signal related with the temperature of the filter 21 input from the filter temperature sensor 34, and input processing of the detection signal related with the temperature of the flame F input from the flame temperature sensor 35. The input/output unit 41 also executes output processing for the fuel injection nozzle 23 with a pulse signal used for fuel injection, output processing for an ignition coil with a control signal that produces sparks with the ignition plug 24, and output processing for the air valve 27 with a control signal that opens or closes the valve.

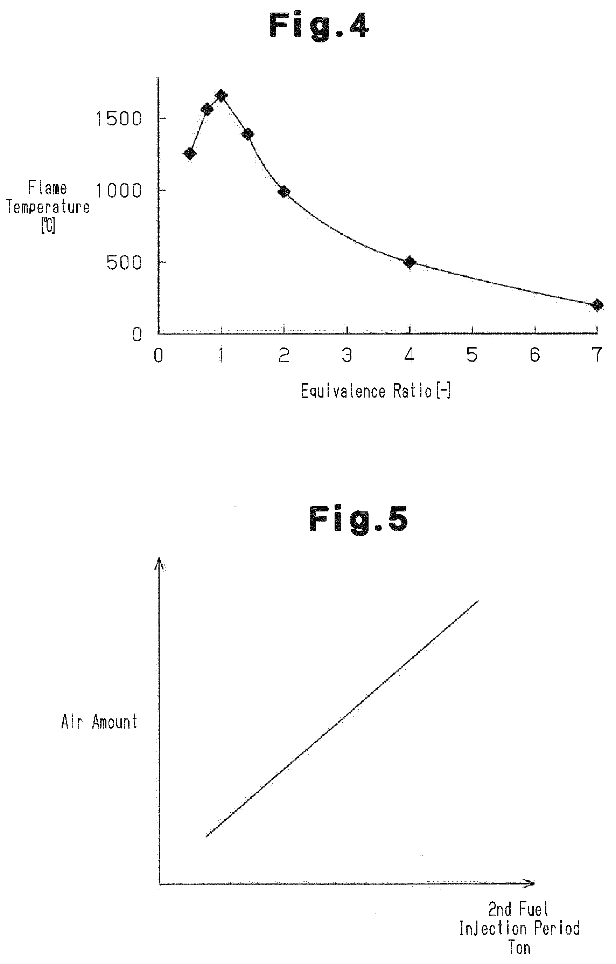

The control unit 42 uses the detection value obtained from the detection signal of the intake air amount sensor 31 to calculate a period in which the fuel is injected from the fuel injection nozzle 23. In this case, the control unit 42 applies the detection value of the intake air amount to a fuel injection amount calculation map (Fig. 5) and calculates the fuel injection amount of the fuel injection nozzle 23 to calculate the period (fuel injection period) in which the fuel is injected from the fuel injection nozzle 23.

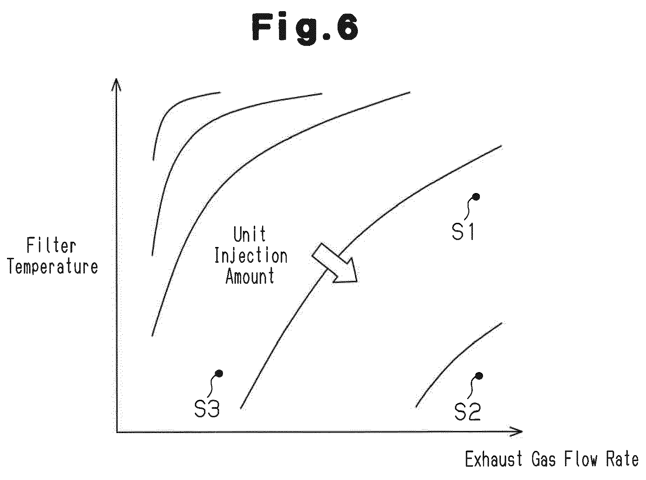

The control unit 42 uses the detection value obtained from the detection signal of the upstream exhaust flow rate sensor 32 to calculate a period (injection stop period) in which the fuel injection nozzle 23 stops fuel injection. In this case, the control unit 42 applies the detection value of the exhaust flow rate to a unit injection amount calculation map (Fig. 6) and calculates the period during which fuel injection is stopped. In this manner, the period during which fuel injection is stopped (injection stop period) is calculated.

The memory unit 43 stores a filter regeneration program for causing a filter regeneration processing of removing the fine particles from the filter 21 to be performed in the exhaust purification device 20. The memory unit 43 also stores the fuel injection map used in the calculation of the fuel injection period described above, and the unit injection amount calculation map used in the calculation of the injection stop period described above.

The nozzle drive unit 44 generates a pulse signal for injecting fuel with the fuel injection nozzle 23 based on the fuel injection period input from the control unit 42 and the injection stop period, which is also input from the control unit 42.

### Pulse Signal

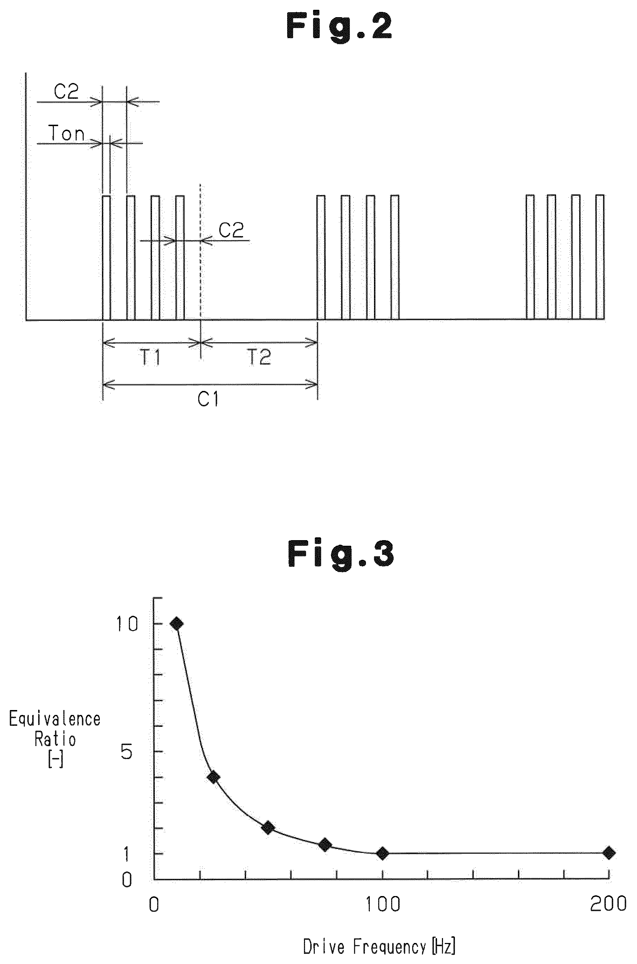

A waveform of the pulse signal generated by the nozzle drive unit 44 will be described with reference to Fig. 2. As shown in Fig. 2, the pulse signal generated by the nozzle drive unit 44 has a first injection cycle C1 that is a period including a single first fuel injection period T1 and a single injection stop period T2 that are continuous with each other. The first fuel injection period T1 is a fixed period in which a predetermined amount of fuel is injected a number of times at a predetermined frequency. The injection stop period T2 is a period in which the injection of the fuel is stopped. Further, the injection stop period T2 is a variable period of which length is variable.

Among the fuel injections repeated at the predetermined frequency in the first fuel injection period T1, the period for a single fuel injection is referred to as a second fuel injection period Ton, and a cycle in which the second fuel injection period Ton is repeated in the first fuel injection period T1 is referred to as a second injection cycle C2.

When a unit injection amount is obtained as the fuel amount obtained by dividing the total amount of the fuel injected in the first injection cycle C1, that is, the total fuel amount injected in the first fuel injection period T1, by the first injection cycle C1, the unit injection amount has a maximum value when setting the injection stop period T2 to zero. The maximum value of the unit injection amount is a value obtained based on tests or the like and set as a unit injection amount that satisfies conditions under which the temperature of the filter 21 reaches the maximum value and the temperature rising speed of the filter 21 reaches the highest value. Since the maximum value of the unit injection amount varies in accordance with the structure of the diesel engine 10 that affects the temperature of the filter 21 such as the range of the exhaust flow rate, the range of the exhaust temperature, and the like of the diesel engine 10 including the exhaust purification device 20, the first fuel injection period T1 is also a fixed period set in accordance with the structure of the diesel engine 10.

### Combustion Mode of Burner

In the burner 22, a ratio of the air amount supplied per unit time from the air supply tube 26 relative to a fuel amount supplied per unit time from the fuel injection nozzle 23 is referred to as a burner air-fuel ratio, and a ratio of the burner air-fuel ratio relative to a stoichiometric air-fuel ratio is referred to as an equivalence ratio.

The value of the equivalence ratio significantly changes in accordance with the value of the second injection cycle C2, that is, the drive frequency of the fuel injection nozzle 23. The value of the equivalence ratio increases as the drive frequency of the fuel injection nozzle 23 increases.

More specifically, as shown in Fig. 3, in a range in which the drive frequency of the fuel injection nozzle 23 is 10 Hz or greater and less than 100 Hz, the equivalence ratio approaches 1 as the drive frequency of the fuel injection nozzle 23 increases. The equivalence ratio is maintained at 1 in a range in which the drive frequency of the fuel injection nozzle 23 is 100 Hz or greater and 200 Hz or less. Although the value of the equivalence ratio slightly changes in accordance with the operation state of the diesel engine 10, the tendency is maintained in which the equivalence ratio is maintained at one in the range of 100 Hz or greater and 200 Hz or less.

The temperature of the flame F in the burner 22 detected by the flame temperature sensor 35 significantly changes in accordance with the equivalence ratio.

More specifically, as shown in Fig. 4, the temperature of the flame F approaches 1627°C, which is the maximum value, as the equivalence ratio increases in the range in which the equivalence ratio is 0.5 or greater and 1 or less. In a range in which the equivalence ratio is greater than one, the flame temperature decreases as the equivalence ratio increases, and the flame temperature decreases to 227°C when the equivalence ratio is 7. Although the temperature of the flame F also slightly changes in accordance with the operation state of the diesel engine 10, the tendency is maintained in which the temperature of the flame F has the highest value in the operation state in which the equivalence ratio is 1.

In the exhaust purification device 20, therefore, when the drive frequency of the fuel injection nozzle 23 is in the range of 100 Hz or greater and 200 Hz or less, the fuel injected from the fuel injection nozzle 23 and the air in the burner 22 can be easily mixed, and the equivalence ratio in the first fuel injection period T1 is easily maintained at 1. The temperature of the flame F generated in the burner 22 is easily maintained at the highest value. Thus, to raise the temperature of the filter 21 that rises per unit time, the equivalence ratio is preferably maintained at 1 by keeping the drive frequency of the fuel injection nozzle 23 in the above-described range. With such an equivalence ratio, the reaction speed of soot, which is the main component of the fine particles deposited on the filter 21, and oxygen increases as the temperature of the filter 21 increases. This increases the speed at which the fine particles are removed as compared to when the equivalence ratio is a value other than 1.

To heat the filter 21 to a predetermined temperature within a shorter time, preferably, fuel is injected so that the temperature of the flame F is maintained at the highest value. However, the temperature of the filter 21 needs to be suppressed to a temperature at which deformation and denaturation of the filter 21 do not occur. For example, if the filter 21 is made of silicon carbide, the time required for the regeneration of the filter 21 is shortened while suppressing deformation and denaturation of the filter 21 by maintaining the temperature of the filter 21 at approximately 900°C. The highest temperature at which the deformation and the denaturation of the filter 21 are suppressed is set as a target temperature.

The following three fuel injection conditions are set to control fuel injection of the fuel injection nozzle 23 based on the above-described demands for regeneration of the filter 21.

As the first fuel injection condition, the drive frequency of the fuel injection nozzle 23 is set to 100 Hz or greater and 200 Hz or less.

As the second fuel injection condition, the fuel injection amount calculation map shown in Fig. 5 is used when calculating the second fuel injection period Ton. In the fuel injection amount calculation map, the second fuel injection period Ton is associated with the air amount supplied to the burner 22 in the first fuel injection period T1 so that the equivalence ratio becomes 1. The intake air amount is detected by the intake air amount sensor 31, and the air amount supplied to the burner 22 is obtained from the detected intake air amount. The second fuel injection period Ton is calculated so that the equivalence ratio in the first fuel injection period T1 becomes 1 based on the air amount supplied to the burner 22. The control unit 42 for calculating the second fuel injection period Ton calculates the air amount supplied to the burner 22 through the air supply tube 26 from the intake air amount. In this case, the control unit 42 converts the intake air amount to the air amount using the rotation speed of the diesel engine 10, the open degree of the throttle valve in the turbine 19, the exhaust flow rate of the EGR pipe 17, and the like.

Finally, as the third fuel injection condition, the injection stop period T2 is set to maintain the temperature of the filter 21 at the target temperature by stopping the injection of fuel following the first fuel injection period T1 in which fuel injection is performed as described above. Since the amount of heat exchanged between the exhaust and the filter 21 increases as the exhaust flow rate increases in the exhaust pipe 18, the temperature decrease in the filter 21 per unit time increases. The injection stop period T2 is set to a length that maintains the generation of the flame F by burning the fuel injected in the first fuel injection period T1. Thus, the temperature of the filter 21 is less likely to decrease as the temperature of the flame F in the burner 22 increases. Further, the temperature of the flame F increases as the injection amount per unit time injected in the first injection cycle C1 increases. In other words, the temperature of the flame F increases as the unit injection amount that is the injection amount obtained by dividing the total amount of fuel injected in the first fuel injection period T1 by the first injection cycle C1 increases.

In this regards, in the present embodiment, a calculation map illustrated in Fig. 6 is used when calculating the injection stop period T2. A unit injection amount calculation map is a map in which the temperature of the filter 21 and the exhaust flow rate are parameters of the unit injection amount. Based on the temperature of the filter 21 detected by the filter temperature sensor 34, a larger unit injection amount is calculated as the temperature of the filter 21 increases. Furthermore, based on the exhaust flow rate detected by the upstream exhaust flow rate sensor 32, a larger unit injection amount is calculated as the exhaust flow rate increases.

For example, according to the unit injection amount calculation map, between state S1 and state S2, which are two states in which the exhaust flow rate is equal, the unit injection amount in state S2 is greater than the unit injection amount in state S1. Thus, even in the states in which the exhaust flow rate is equal, the unit injection amount is set to decrease as the temperature of the filter 21 increases.

The injection stop period T2 is calculated based on the total fuel amount in the first fuel injection period T1 by the second fuel injection period Ton calculated from the fuel injection amount calculation map to obtain the unit injection amount calculated from the unit injection amount calculation map. Thus, the injection stop period T2 is set to be shorter as the unit injection amount increases when the operation state shifts from state S1 to state S2. Furthermore, the injection stop period T2 is set to be longer as the unit injection amount decreases when the operation state shifts from state S2 to state S1.

For example, between state S2 and state S3, which are two states in which the temperature of the filter 21 is equal, the unit injection amount in state S2 is greater than the unit injection amount in state S3. Thus, even in the states in which the temperature of the filter 21 is equal, the unit injection amount is set to increase as the exhaust flow rate increases.

The injection stop period T2 is calculated based on the total fuel amount in the first fuel injection period T1 by the second fuel injection period Ton calculated from the fuel injection amount calculation map to obtain the unit injection amount calculated from the unit injection amount calculation map. Thus, the injection stop period T2 is set to be longer as the unit injection amount decreases when the operation state shifts from state S2 to state S3. Furthermore, the injection stop period T2 is set to be shorter as the unit injection amount increases when the operation state shifts from state S3 to state S2.

Therefore, in the injection stop period T2, the exhaust flow rate, the temperature of the filter 21, and the total fuel amount injected in the first fuel injection period T1 are taken into consideration. Thus, compared to when the injection stop period T2 is calculated taking into consideration only the temperature of the filter 21, for example, the temperature of the filter 21 is more easily maintained at the target temperature.

### Operation of Exhaust Purification Device

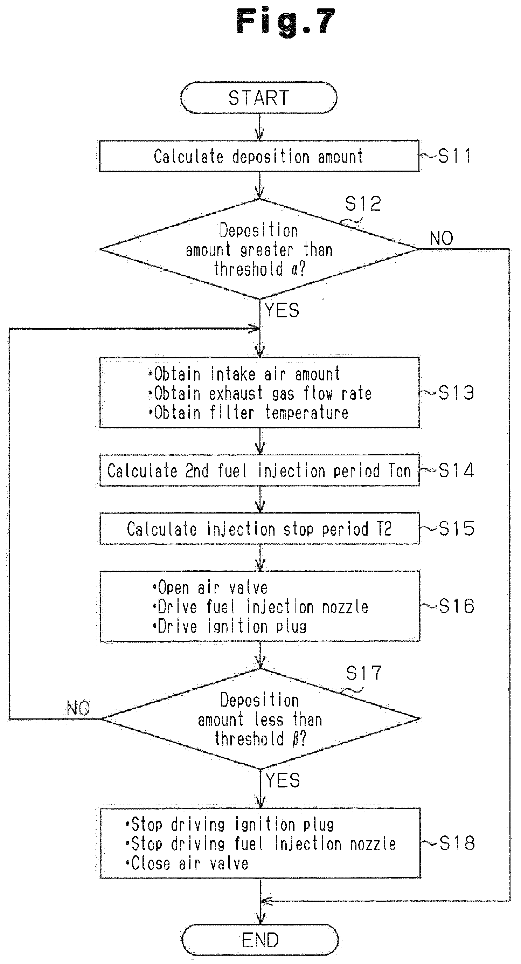

The filter regeneration processing, which is one of the operations performed by the exhaust purification device 20, will now be described with reference to Fig. 7. The filter regeneration processing is performed in predetermined time intervals when the control unit 42 executes the filter regeneration program.

As shown in Fig. 7, in the filter regeneration processing, the control unit 42 first calculates the amount of fine particles deposited on the filter 21 (step S11). In this case, the control unit 42 acquires the upstream exhaust flow rate and the downstream exhaust flow rate from the input/output unit 41, and calculates the deposition amount of fine particles on the filter 21 based on the difference.

The control unit 42 then compares the calculated deposition amount and a threshold α of the deposition amount stored in the memory unit 43 (step S12). The control unit 42 terminates the filter regeneration processing when the calculated deposition amount is less than or equal to the threshold α (step S12: NO). For example, a deposition amount of 95% with respect to the maximum deposition amount of fine particles in the filter 21 is set as the threshold α.

If the deposition amount is greater than the threshold α (step S12: YES), the control unit 42 acquires the most recent intake air amount, upstream exhaust flow rate, and temperature of the filter 21 from the input/output unit 41 (step S13). The control unit 42 reads the fuel injection amount calculation map (Fig. 5) from the memory unit 43, and applies the most recent intake air amount to the fuel injection amount calculation map to calculate the second fuel injection period Ton (step S14).

After the second fuel injection period Ton is calculated, the control unit 42 reads the unit injection amount calculation map (Fig. 6) from the memory unit 43, and applies the most recent upstream exhaust flow rate and the temperature of the filter 21 to the unit injection amount calculation map to calculate the unit injection amount in the first injection cycle C1. The control unit 42 then calculates the injection stop period T2 based on the calculated unit injection amount and the second fuel injection period Ton (step S15).

The control unit 42 controls the input/output unit 41 so that the input/output unit 41 outputs to the air valve 27 a control signal for opening the air valve 27. The drive unit of the air valve 27 then generates a drive voltage based on the control signal. This opens the air valve 27 and supplies intake air from the intake pipe 13 to the exhaust purification device 20 (step S16).

Also, in step S16, the control unit 42 outputs a control signal for generating the pulse signal to the nozzle drive unit 44, and outputs the second fuel injection period Ton calculated in step S14 and the injection stop period T2 calculated in step S15 to the nozzle drive unit 44. The nozzle drive unit 44 generates a pulse signal at a predetermined drive frequency based on the second fuel injection period Ton and the injection stop period T2, and outputs the pulse signal to the fuel injection nozzle 23 through the input/output unit 41. The fuel injection nozzle 23 then injects fuel in accordance with the second fuel injection period Ton and the injection stop period T2.

Further, in step S16, the control unit 42 outputs a control signal for driving the ignition plug 24 from the input/output unit 41 to the ignition plug 24. A drive unit of the ignition plug 24 then generates a drive voltage based on the control signal. This drives the ignition plug 24 and produces sparks in the space surrounded by the flame stabilizer 25. As a result, the mixture of fuel and air in the exhaust purification device 20 is ignited, and the flame F is generated in the flame stabilizer 25. The exhaust supplied from the exhaust pipe 18 to the exhaust purification device 20 is heated by the flame F and then supplied to the filter 21 to raise the temperature of the filter 21. As a result, the temperature of the filter 21 is raised to a temperature at which the deposited fine particles are removed from the filter 21.

In this manner, when burning fuel corresponding to a single first injection cycle C1, the control unit 42 calculates the amount of fine particles removed in the present first injection cycle C1 based on, for example, the second fuel injection period Ton and the injection stop period T2. The control unit 42 then subtracts the removed amount of fine particles from the deposition amount of fine particles calculated in step S11 to calculate the deposition amount of fine particles remaining in the filter 21.

The control unit 42 then reads a threshold β stored in the memory unit 43 for comparison with the deposition amount of fine particles remaining on the filter 21 (step S17). If the deposition amount of fine particles remaining on the filter 21 is greater than or equal to the threshold β (step S17: NO), the control unit 42 returns to step S13 to calculate again the second fuel injection period Ton and the injection stop period T2. Further, the control unit 42 burns fuel in the exhaust purification device 20 (step S14 to step S16). Meanwhile, the second fuel injection period Ton and the injection stop period T2 are calculated based on the intake air amount, the input side exhaust flow rate, the temperature of the filter 21, and the like during the present combustion so that the length of the first injection cycle C1 and the total amount of fuel in the first fuel injection period T1 are in accordance. Thus, when the temperature of the filter 21 is raised to the target temperature, the temperature of the filter 21 is maintained in the proximity of the target temperature until the filter regeneration processing is finished.

The threshold β is, for example, the deposition amount of 5% with respect to the maximum deposition amount of fine particles in the filter 21. In step S13, the most recent intake air amount, input side exhaust flow rate, and temperature of the filter 21 are updated whenever the control unit 42 processes step S13.

When the deposition amount of fine particles remaining on the filter 21 becomes smaller than the threshold β by repetitively burning fuel in the first injection cycle C1 in such a manner (step S17: YES), the control unit 42 controls the input/output unit 41 so that the input/output unit 41 outputs to the ignition plug 24 a control signal for stopping the driving of the ignition plug 24. A drive unit of the ignition plug 24 then stops driving the ignition plug 24 based on the control signal (step S18).

Also, in step S18, the control unit 42 generates a control signal for stopping the driving of the fuel injection nozzle 23 with the nozzle drive unit 44. Further, the control unit 42 outputs a stop signal to the fuel injection nozzle 23 through the input/output unit 41. This stops the driving of the fuel injection nozzle 23.

Further, in step S18, the control unit 42 controls the input/output unit 41 so that the input/output unit 41 outputs to the air valve 27 a control signal for closing the air valve 27. The drive unit of the air valve 27 generates a drive voltage based on the control signal. This closes the air valve 27 and stops the supply of intake air from the intake pipe 13 to the exhaust purification device 20. After the driving of the ignition plug 24 and the fuel injection nozzle 23 is stopped and the air valve 27 is closed in such a manner, the control unit 42 terminates the filter regeneration processing.

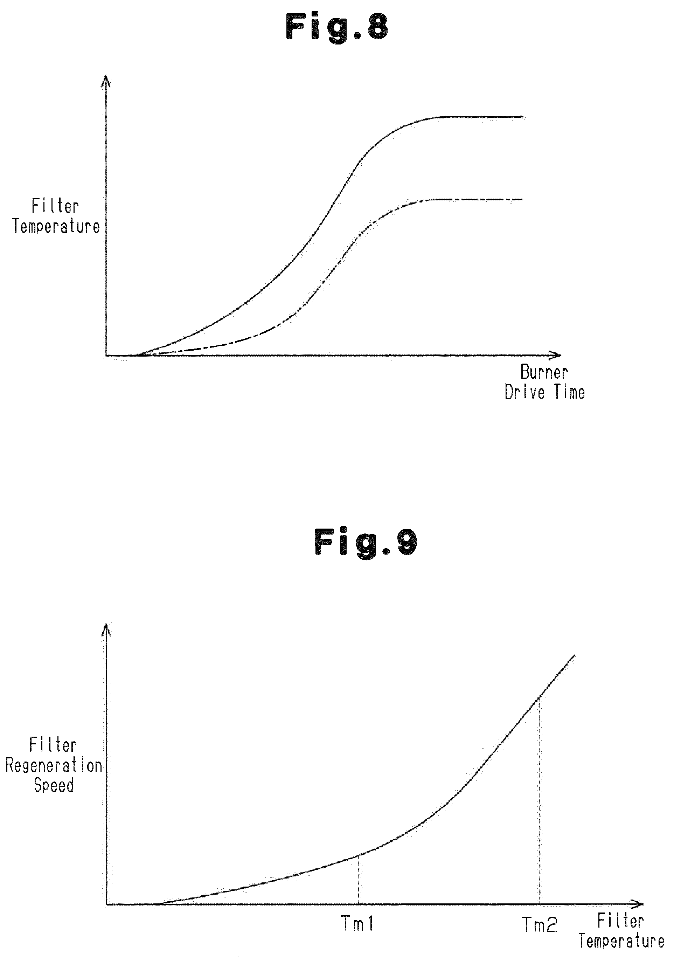

The shifting of the temperature of the filter 21 resulting from the injection of the fuel injection nozzle 23 will now be described with reference to Fig. 8 together with the shifting of the temperature of the filter 21 in a comparative example. In Fig. 8, the shifting of the temperature of the filter 21 of the present embodiment is shown by a solid line, and the shifting of the temperature of the filter 21 of the comparative example is shown by a dashed line. In the comparative example, fuel was repeatedly injected in fuel injection periods of 2.5 milliseconds with the drive frequency of the fuel injection nozzle 23 set as 20 Hz. The used filter was formed from cordierite.

As shown in Fig. 8, in the present embodiment, the temperature of the filter 21 was increased at a speed of 1.5 times to 2 times faster than that of the comparative example from when driving the burner 22 to until the temperature of the filter 21 was saturated at the target temperature. Thus, even though the target temperature of the filter 21 is set to be higher than that of the comparative example, in the present embodiment, the drive time of the burner 22 until reaching the target temperature is suppressed and does not become long. That is, when raising the filter 21 to the same temperature, the temperature of the filter 21 can reach the target temperature within a shorter time than the comparative example. Furthermore, in the embodiment, even if the target temperature of the filter 21 is set to a higher temperature, the temperature of the filter 21 may be stably maintained at the target temperature in the same manner as when the target temperature is set to a lower temperature.

The relationship of each target temperature and the regeneration speed of the filter 21 will now be described with reference to Fig. 9 when the target temperature in the comparative example is Tm1 and the target temperature in the embodiment is Tm2. The regeneration speed of the filter 21 is the amount of fine particles removed per unit time.

As shown in Fig. 9, when the filter regeneration processing is performed at the target temperature Tm2 in the embodiment, the regeneration speed of the filter 21 is increased by approximately four times compared to when the filter regeneration processing is performed at the target temperature Tm1 of the comparative example.

In this manner, the time required to reach the target temperature is suppressed so as not to become long and the time required for the regeneration of the filter 21 may be reduced while stably maintaining the temperature of the filter 21 by mounting the filter 21 made of silicon carbide, which is a material of high heat resistance, and performing the regeneration processing of the filter 21 through the injection cycle described above.

As described above, the embodiment described above has the following advantages.
(1) In the first fuel injection period T1, which is a fixed period, the fuel injection nozzle 23 injects fuel for a number of times at a predetermined frequency. Thus, compared to when injecting the same amount of fuel all at once in the first fuel injection period T1, mixing of the air supplied to the burner 22 with fuel is facilitated. This advances fuel combustion. As a result, the temperature of the exhaust that passes the burner 22 is increased thereby increasing the temperature of the filter 21 arranged at the downstream side of the burner 22 relative to the flow of exhaust.
   The cycle of injection of the fuel by the fuel injection nozzle 23 includes a single first fuel injection period T1 and a single injection stop period T2. Furthermore, the injection stop period T2 is set based on the third fuel injection condition. In this case, the length of the injection stop period T2 increases as the temperature of the filter 21 increases. Thus, an increase in the temperature of the filter 21 increases the proportion of exhaust having a relatively low temperature in the exhaust supplied to the filter 21. In contrast, a decrease in the temperature of the filter 21 decreases the proportion of exhaust having a relatively low temperature in the exhaust supplied to the filter 21. Thus, an excessive decrease in the temperature of the filter 21 is suppressed, and insufficient decrease of the temperature of the filter 21 is suppressed. Accordingly, the temperature of the filter 21 may be raised without affecting the stability of the temperature of the filter 21.
(2) The injection stop period T2 is set to be shorter as the exhaust flow rate increases in the exhaust pipe 18. That is, the injection stop period T2 is set to be shorter as the exhaust flow rate increases and the degree at which the temperature falls in the filter 21 per unit time increases. In contrast, the injection stop period T2 is set to be longer as the exhaust flow rate decreases and the degree at which the temperature falls in the filter 21 per unit time decreases. Thus, an excessive decrease in the temperature of the filter 21 is suppressed, and insufficient decrease of the temperature of the filter 21 is suppressed. This easily maintains the temperature of the filter 21 at a predetermined temperature.
(3) The second fuel injection period Ton is set based on the second fuel injection condition. In this case, the second fuel injection period Ton becomes longer as the air amount supplied to the burner 22 in the first fuel injection period T1 increases. Thus, the amount of the fuel injected from the fuel injection nozzle 23 relative to the air amount does not become excessive or insufficient. The temperature in the vicinity of the burner 22 is not decreased by unburned residual fuel and not limited by the supplied fuel amount. Thus, the temperature of the exhaust supplied to the filter 21 is easily raised by the fuel in the burner 22. This easily increases the temperature of the filter 21.
(4) The second fuel injection period Ton is changed so that the burner air-fuel ratio in the first fuel injection period T1 conforms to the stoichiometric air-fuel ratio, that is, so that the equivalence ratio becomes 1. Thus, the fuel injected from the fuel injection nozzle 23 reacts with the oxygen in the air supplied to the burner 22 without being insufficient or excessive. Thus, the temperature in the vicinity of the burner 22 is suppressed from being decreased by unburned residual fuel or from being limited by the supplied fuel amount. Accordingly, the temperature of the exhaust supplied to the filter 21 is easily raised by the fuel in the burner 22. This easily increases the temperature of the filter 21.
(5) The frequency at which the fuel is injected is set based on the first fuel injection condition, and the frequency is 100 Hz or greater and 200 Hz or less. Thus, fuel and air are easily mixed, and the equivalence ratio in the vicinity of the fuel injection nozzle 23 easily becomes 1. This easily burns fuel without being insufficient or excessive, and easily increases the temperature of the filter 21.
(6) When setting the injection stop period T2, the unit injection amount is calculated based on the exhaust flow rate and the temperature of the filter 21, and the injection stop period T2 is calculated from the unit injection amount and the total fuel amount injected in the first fuel injection period T1. The fuel injected during the first fuel injection period T1 is continuously burned even after the injection stop period T2. Furthermore, the temperature of the flame generated by the combustion increases as the unit injection amount increases. The amount of heat exchanged between the filter and the exhaust increases as changes in the exhaust flow rate in the exhaust pipe 18 increases. For example, the temperature of the filter 21 is less likely to decrease as the exhaust flow rate decreases, and the temperature of the filter 21 easily decreases as the exhaust flow rate decreases. Thus, the temperature of the filter 21 is affected by the unit injection amount and the exhaust flow rate. In this regards, the injection stop period T2 of the first injection cycle C1 is set as a value taking into consideration the exhaust flow rate and the unit injection amount. This maintains the temperature of the filter 21 at the predetermined temperature.
(7) The setting of the injection stop period T2 and the setting of the second fuel injection period Ton are performed in the first injection cycle C1 including the first fuel injection period T1 and the injection stop period T2. Thus, the combustion state of the burner 22 and the temperature of the filter 21 are reflected on the setting of the injection stop period T2 and the second fuel injection period Ton within the shortest interval. The width of changes in the temperature of the filter 21 thus becomes small compared to when the setting of the periods described above are performed at an interval longer than the first injection cycle C1.
(8) The filter 21 is formed from silicon carbide. Thus, the heat resistance temperature is high and deformation is less likely to occur compared to ceramics such as cordierite often used in the prior art. This is preferable as the filter 21 of the exhaust purification device 20 for the diesel engine 10 that injects fuel in a manner easily increasing the temperature of the filter 21.

The above embodiment may be modified as described below.

The injection stop period T2 may be set in accordance with the temperature of the filter 21 without taking into consideration the exhaust flow rate in the exhaust pipe 18. In this case, the injection stop period T2 is set to be longer as the temperature of the filter 21 increases. This structure also obtains advantages (1) and (3) to (8).

The second fuel injection period Ton may be set to be longer as the air amount supplied to the burner 22 in the first fuel injection period T1 increases in at least part of the setting of the second fuel injection period Ton. In such a structure, advantage (3) may be obtained if the second fuel injection period Ton is set in accordance with the first fuel injection period T1. For example, in a configuration that takes into consideration parameters other than the air amount in the burner 22 when calculating the second fuel injection period Ton, the second fuel injection period Ton may be set to be relatively short even when the air amount supplied to the burner 22 is relatively large.

The second fuel injection period Ton may be constant regardless of the air amount supplied to the burner 22. In this case, the second fuel injection period Ton only needs to have a length in which the injection of the fuel is performed a number of times in the first fuel injection period T1. A plurality of second fuel injection periods Ton, in which the length of the period of fuel injection differs from each other, may be set within the first fuel injection period T1 regardless of the air amount supplied to the burner 22. This also obtains advantages (1), (2), and (4) to (8).

The equivalence ratio in the first fuel injection period T1 does not have to be 1. In this case, preferably, the equivalence ratio is changed so that the temperature of the flame F generated in the flame stabilizer 25 becomes maximal in accordance with combustion test results of the exhaust purification device 20 and the like. Furthermore, the temperature of the flame F when the filter regeneration processing is performed in the exhaust purification device 20 and the present equivalence ratio may be stored, and the total fuel amount injected in the first fuel injection period T1 may be changed so that the equivalence ratio of when performing the filter regeneration processing next becomes the equivalence ratio when the maximum value in the temperature of the flame F is detected.

In the first fuel injection period T1, the ratio of the total amount of the injected fuel to the air amount supplied to the burner 22 may be the stoichiometric air-fuel ratio in at least one part of the period.

In the first fuel injection period T1, the ratio of the total amount of the injected fuel to the air amount supplied to the burner 22 does not have to be the stoichiometric air-fuel ratio, that is, the equivalence ratio does not have to be 1. This also obtains advantages (1) to (3) and (5) to (8).

The drive frequency of the fuel injection nozzle 23 does not have to be in the range of 100 Hz or greater and 200 Hz or less as long as the drive frequency allows for fuel to be burned in the exhaust purification device 20. This also obtains advantages (1) to (4) and (6) to (8).

The unit injection amount may be calculated without using the map described above. Instead, a mathematical equation may be used to which the upstream exhaust flow rate and the temperature of the filter 21 are applied.

The injection stop period T2 may be calculated without calculating the unit injection amount. For example, the injection stop period T2 may be calculated in accordance with only the temperature of the filter 21, as described above. The length of the injection stop period T2 may be directly calculated from the exhaust flow rate and the temperature of the filter 21. This also obtains advantages (1) to (5), (7), and (8).

The second fuel injection period Ton and the injection stop period 2 are set in the first injection cycle C1. However, the second fuel injection period Ton and the injection stop period T2 may be set for each of a number of first injection cycles C1. Further, calculations may be performed in a cycle differing from the first injection cycle C1.

The filter 21 may be formed from a material other than silicon carbide. A material having the same heat resistance as silicon carbide may be used as the material for forming the filter 21. A filter may be formed from a material having the same heat resistance as the prior art. This also obtains advantages (1) to (7).

The fuel injected from the fuel injection nozzle 23 does not have to be supplied from a fuel pump and may be supplied from a common rail. Further, a fuel pump that supplies fuel only to the fuel injection nozzle 23 may be used.

The exhaust purification device 20 may have a structure in which a glow heater is used in addition to the ignition plug 24. Further, as long as the flame F can be generated, the exhaust purification device 20 may have a structure using only the glow heater.

Instead of the air supply tube 26 connected to the intake pipe 13, air may be supplied to the exhaust purification device 20 through an air supply tube connected to an air tank of a brake or an air supply tube connected to a blower for the exhaust purification device.

The flame temperature sensor 35 may be omitted.

The filter temperature sensor 34 may be embodied as a sensor that is arranged immediately before the filter 21 to detect the temperature of the exhaust flowing into the filter 21. Alternatively, the temperature of the filter 21 may be calculated from the temperature of the flame F detected by the flame temperature sensor 35, and the filter temperature sensor 34 may be omitted.

In lieu of the downstream exhaust flow rate sensor 33, a differential pressure sensor for detecting the pressure difference of the exhaust flow rate at the upstream side and the exhaust flow rate at the downstream side of the filter 21 may be used.

The injection stop period T2 does not need a length that maintains the generation of the flame F with the combustion of fuel injected in the first fuel injection period T1. For example, the injection stop period T2 may include a period in which the flame F is not generated.

When calculating the second fuel injection period Ton, the intake air amount, which is the detection value of the intake air amount sensor 31, may not be converted to the air amount supplied to the burner 22. In this case, a map for calculating the second fuel injection period Ton directly from the intake air amount may be used as the fuel injection amount calculation map.

The deposition amount of fine particles in the filter 21 does not have to be calculated based on the difference of the exhaust flow rate at the upstream side and the exhaust flow rate at the downstream side of the filter 21. For example, the amount of fine particles may be calculated every predetermined period based on the operation state of the diesel engine 10, for example, the rotation speed of the diesel engine 10, the fuel amount injected to each cylinder 11a, and the like. Further, the deposition amount of fine particles may be calculated by integrating such amounts of fine particles.

The threshold α and the threshold β may be changed if necessary as long as the threshold α is greater than the threshold β.

A method for calculating the amount of fine particles removed from the filter 21 by a single first injection cycle C1 is not limited to a calculation based on the second fuel injection period Ton and the injection stop period T2. For example, other methods may be used such as a method of calculation based on a detection value of the upstream exhaust flow rate sensor 32 and a detection value of the downstream exhaust flow rate sensor 33 when the first injection cycle C1 is completed.

The engine including the exhaust purification device may be a gasoline engine.

## Claims

1. An engine exhaust purification device comprising:
a filter (21) that is arranged in an exhaust pipe (18) of an engine (10) and traps fine particles that are suspended in an exhaust passing through the exhaust pipe (18);
a burner (22) including a fuel injection nozzle (23) and arranged at a position located at an upstream side of the filter (22) in the exhaust pipe (18), wherein the burner (22) burns fuel injected from the fuel injection nozzle (23) and heats the exhaust to increase the temperature of the filter (21) and remove the fine particles trapped in the filter (21); and
a control unit (40) that controls a fuel injection mode of the fuel injection nozzle (23),
**characterized in that**
a period including a single fuel injection period (T1) and a single injection stop period (T2) is set as a single injection cycle (C1),
the fuel injection period (T1) is a period in which fuel is injected for a number of times at a predetermined frequency,
the injection stop period (T2) is a variable period in which the injection of fuel is stopped,
the control unit (40) controls the fuel injection nozzle (23) so that the fuel injection nozzle (23) injects fuel in accordance with the injection cycle (C1),
the control unit (40) is configured to lengthen the injection stop period (T2) as the temperature of the filter (21) increases,
the fuel injection period (T1) is a first fuel injection period,
a period of one of a number of injections repeated at the predetermined frequency in the first fuel injection period (T1) is a second fuel injection period (Ton),
the engine (10) includes an intake pipe (26) that supplies air to the burner (22),
the control unit (40) is configured to lengthen the second fuel injection period (Ton) as the air amount supplied to the burner (22) increases in the first fuel injection period (T1), and
the control unit (40) is configured to set the second fuel injection period (Ton) so that a ratio of a total amount of fuel injected in the first fuel injection period (T1) and an air amount supplied to the burner (22) in the first fuel injection period (T1) conforms to the stoichiometric air-fuel ratio.

2. The engine exhaust purification device according to claim 1, **characterized in that** the control unit (40) is configured to lengthen the injection stop period (T2) as an exhaust flow rate decreases in the exhaust pipe (18).

3. The engine exhaust purification device according to claim 1, **characterized in that** the control unit (40) sets the injection stop period (T2) and the second fuel injection period (Ton) in the injection cycle (C1).

4. The engine exhaust purification device according to any one of claims 1 to 3, **characterized in that** the control unit (40) sets the frequency to 100 Hz or greater and 200 Hz or less.

5. The engine exhaust purification device according to any one of claims 1 to 4, **characterized in that**
the control unit (40) sets a unit injection amount, which is an injection amount of fuel per unit time in the injection cycle (C1), based on a map of which parameters are the exhaust flow rate in the exhaust pipe (18) and the temperature of the filter (21); and
the control unit (40) calculates and sets the injection stop period (T2) from the total amount of fuel injected in the fuel injection period (T1) and the unit injection amount.

## Patentansprüche

1. Eine Abgasreinigungsvorrichtung für einen Motor, die Folgendes aufweist:
einen Filter (21), der in einem Abgasrohr (18) eines Motors (10) angebracht ist und der Feinstaubpartikel abfängt, die im Abgas, das durch das Abgasrohr (18) geleitet wird, enthalten sind;
einen Brenner (22), der eine Kraftstoffeinspritzdüse (23) einschließt und an einer Position angebracht ist, die sich an einer vorgeschalteten Seite des Filters (22) im Abgasrohr (18) befindet, wobei der Brenner (22) Kraftstoff verbrennt, der von der Kraftstoffeinspritzdüse (23) eingespritzt wird und das Abgas aufheizt, um die Temperatur des Filters (21) zu erhöhen und die Feinstaubpartikel, die im Filter (21) abgefangen wurden, zu beseitigen; und
eine Steuereinheit (40), die einen Kraftstoffeinspritzmodus der Kraftstoffeinspritzdüse (23) steuert,
**dadurch gekennzeichnet dass**
ein Zeitraum, der eine einzelne Kraftstoffeinspritzdauer (T1) und eine einzelne Einspritzstoppdauer (T2) einschließt, als einzelner Einspritzzyklus (C1) eingestellt ist,
die Kraftstoffeinspritzdauer (T1) ein Zeitraum ist, in dem der Kraftstoff mehrmals in einer vorbestimmten Frequenz eingespritzt wird,
die Einspritzstoppdauer (T2) ein variabler Zeitraum ist, in dem die Einspritzung des Kraftstoffs gestoppt wird,
die Steuereinheit (40) die Kraftstoffeinspritzdüse (23) steuert, so dass die Kraftstoffeinspritzdüse (23) den Kraftstoff in Übereinstimmung mit dem Einspritzzyklus (C1) einspritzt,
die Steuereinheit (40) so konfiguriert ist, dass sie die Einspritzstoppdauer (T2) in dem Maße verlängert, wie die Temperatur des Filters (21) steigt,
die Kraftstoffeinspritzdauer (T1) eine erste Kraftstoffeinspritzdauer ist,
ein Zeitraum einer aus einer Reihe von Einspritzungen, die in einer vorbestimmten Frequenz während der ersten Kraftstoffeinspritzdauer (T1) wiederholt werden, eine zweite Kraftstoffeinspritzdauer (Ton) ist,
der Motor (10) ein Ansaugrohr (26) einschließt, das Luft in den Brenner (22) leitet,
die Steuereinheit (40) so konfiguriert ist, dass sie die zweite Kraftstoffeinspritzdauer (Ton) in dem Maße verlängert, wie die Luftmenge, die in den Brenner (22) geleitet wird, in der ersten Kraftstoffeinspritzdauer (T1) steigt, und
die Steuereinheit (40) so gestaltet ist, dass sie die zweite Kraftstoffeinspritzdauer (Ton) einstellen kann, so dass ein Verhältnis einer Gesamtmenge einer während der ersten Kraftstoffeinspritzdauer (T1) eingespritzten Kraftstoff-Gesamtmenge und einer in den Brenner (22) während der ersten Krafteinspritzdauer (T1) gelieferten Luftmenge mit dem stöchiometrischen Luft-Kraftstoff-Verhältnis übereinstimmt.

2. Die Abgasreinigungsvorrichtung für den Motor gemäß Anspruch 1, **dadurch gekennzeichnet, dass** die Steuereinheit (40) so gestaltet ist, dass sie die Einspritzstoppdauer (T2) verlängern kann, wenn ein Abgasvolumenstrom im Abgasrohr (18) absinkt.

3. Die Abgasreinigungsvorrichtung für den Motor gemäß Anspruch 1, **dadurch gekennzeichnet, dass** die Steuereinheit (40) die Einspritzstoppdauer (T2) und die zweite Kraftstoffeinspritzdauer (Ton) im Einspritzzyklus (C1) einstellt.

4. Die Abgasreinigungsvorrichtung für den Motor gemäß eines der Ansprüche 1 bis 3, **dadurch gekennzeichnet, dass** die Steuereinheit (40) die Frequenz auf 100 Hz oder höher und 200 Hz oder weniger einstellt.

5. Die Abgasreinigungsvorrichtung für den Motor gemäß eines der Ansprüche 1 bis 4,
**dadurch gekennzeichnet, dass**
die Steuereinheit (40) eine Einheit-Einspritzmenge einstellt, die eine Kraftstoff-Einspritzmenge pro Zeit je Einheit im Einspritzzyklus (C1) ist, auf der Basis eines Kennfelds, bei dem die Parameter der Abgasvolumenstrom im Abgasrohr (18) und die Temperatur des Filters (21) sind; und
die Steuereinheit (40) die Einspritzstoppdauer (T2) von der Gesamtmenge der während der Kraftstoffeinspritzdauer (T1) eingespritzten Kraftstoff-Gesamtmenge und der Einheit-Einspritzmenge berechnet und einstellt.

## Revendications

1. Un dispositif de purification d'échappement de moteur comprenant :
un filtre (21) qui est agencé dans un tuyau d'échappement (18) d'un moteur (10) et qui piège des particules fines qui sont en suspension dans un échappement passant au travers du tuyau d'échappement (18),
un brûleur (22) comprenant une buse d'injection de carburant (23) et agencé au niveau d'une position située à un côté amont du filtre (22) dans le tuyau d'échappement (18), où le brûleur (22) brûle du carburant injecté à partir de la buse d'injection de carburant (23) et chauffe l'échappement de façon à accroître la température du filtre (21) et éliminer les particules fines piégées dans le filtre (21), et
une unité de commande (40) qui commande un mode d'injection de carburant de la buse d'injection de carburant (23),
**caractérisé en ce que**
une période comprenant un période d'injection de carburant unique (T1) et une période d'arrêt d'injection unique (T2) est définie en tant que cycle d'injection unique (C1),
la période d'injection de carburant (T1) est une période au cours de laquelle du carburant est injecté un nombre de fois à une fréquence prédéterminée,
la période d'arrêt d'injection (T2) est une période variable au cours de laquelle l'injection de carburant est arrêtée,
l'unité de commande (40) commande la buse d'injection de carburant (23) de sorte que la buse d'injection de carburant (23) injecte du carburant conformément au cycle d'injection (C1),
l'unité de commande (40) est configurée de façon à prolonger la période d'arrêt d'injection (T2) à mesure que la température du filtre (21) augmente,
la période d'injection de carburant (T1) est une première période d'injection de carburant,
une période d'une injection d'un nombre d'injections répétées à la fréquence prédéterminée au cours de la première période d'injection de carburant (T1) est une deuxième période d'injection de carburant (Ton),
the moteur (10) comprend un tuyau d'admission (26) qui fournit de l'air au brûleur (22),
l'unité de commande (40) est configurée de façon à prolonger la deuxième période d'injection de carburant (Ton) à mesure que la quantité d'air fournie au brûleur (22) augmente au cours de la première période d'injection de carburant (T1), et
l'unité de commande (40) est configurée de façon à définir la deuxième période d'injection de carburant (Ton) de sorte qu'un rapport d'une quantité totale de carburant injecté au cours de la première période d'injection de carburant (T1) sur une quantité d'air fournie au brûleur (22) au cours de la première période d'injection de carburant (T1) soit conforme au rapport air-carburant stoechiométrique.

2. Le dispositif de purification d'échappement de moteur selon la Revendication 1, **caractérisé en ce que** l'unité de commande (40) est configurée de façon à prolonger la période d'arrêt d'injection (T2) à mesure qu'un débit d'échappement diminue dans le tuyau d'échappement (18).

3. Le dispositif de purification d'échappement de moteur selon la Revendication 1, **caractérisé en ce que** l'unité de commande (40) définit la période d'arrêt d'injection (T2) et la deuxième période d'injection de carburant (Ton) dans le cycle d'injection (C1).

4. Le dispositif de purification d'échappement de moteur selon l'une quelconque des Revendications 1 à 3, **caractérisé en ce que** l'unité de commande (40) définit la fréquence sur 100 Hz ou plus et 200 Hz ou moins.

5. Le dispositif de purification d'échappement de moteur selon l'une quelconque des Revendications 1 à 4,
**caractérisé en ce que**
l'unité de commande (40) définit une quantité d'injection unitaire, qui est une quantité d'injection de carburant par unité temporelle dans le cycle d'injection (C1), en fonction d'une carte dont les paramètres sont le débit d'échappement dans le tuyau d'échappement (18) et la température du filtre (21), et
l'unité de commande (40) calcule et définit la période d'arrêt d'injection (T2) à partir de la quantité totale de carburant injectée au cours de la période d'injection de carburant (T1) et de la quantité d'injection unitaire.
